# EUROPÄISCHE PATENTSCHRIFT

(11) **EP 1 287 206 B1**
(45) Veröffentlichungstag und Bekanntmachung des Hinweises auf die Patenterteilung: **01.02.2006**
(21) Anmeldenummer: 01957804.6
(22) Anmeldetag: 23.05.2001
(51) Int. Cl.: E02B 15/04

(54) **VORRICHTUNG ZUM BERGEN VON ÖL EINES ÖLTEPPICHS AUF EINEM GEWÄSSER**
DEVICE FOR RECOVERING OIL FROM AN OIL-SLICK ON A STRETCH OF WATER
DISPOSITIF POUR RECUPERER DU PETROLE FORMANT UNE NAPPE SUR UN PLAN D'EAU

(30) Priorität: 26.05.2000 DE 10026229
(43) Veröffentlichungstag der Anmeldung: 05.03.2003
(73) Patentinhaber: Garbaty, Helga, 22851 Norderstedt (DE); Garbaty, Stefan Wolfgang, 20251 Hamburg (DE); Garbaty, Rudolf Franz, 22851 Norderstedt (DE)
(72) Erfinder: GARBATY, Rudolf, Franz, 22851 Norderstedt (DE)
(74) Vertreter: Jaeschke, Rainer
(86) Internationale Anmeldenummer: PCT/EP2001/005944
(87) Internationale Veröffentlichungsnummer: WO 2001/090486

(56) Entgegenhaltungen:
- US-A- 3 822 789
- US-A- 4 487 694

## Beschreibung

Die Erfindung betrifft eine Vorrichtung zum Bergen von Öl eines Ölteppichs auf einem Gewässer, welche Vorrichtung durch wenigstens einen ersten Schwimmkörper auf dem Wasser getragen wird und mit einem Einlauf versehen ist, der auf einer Seite in Richtung auf den Ölteppich offen ist und auf der anderen Seite in einen Kanal mit Seitenwandungen mündet.

Es ist allgemein bekannt, daß Ölhavarien auf See zu großen Umweltkatastrophen führen. Insbesondere, wenn die Havarie in der Nähe einer Küste stattfindet, ist eine Verschmutzung großer bis größter Küstenstreifen mit Öl nicht zu vermeiden. Die Folge ist eine Vernichtung der Flora und Fauna in diesem Gebiet auf eine unabsehbare Zeit. Entsprechendes gilt für Ölhavarien auf hoher See, jedoch wirken sich hier die Umweltkatastrophen nicht unmittelbar sichtbar aus.

Es ist grundsätzlich bekannt, daß sich auslaufendes Öl in Form eines Ölteppichs auf dem Gewässer ausbildet. Ein solcher Ölteppich breitet sich immer weiter aus. Dies aufgrund der häufig nachfließenden Ölmenge und aufgrund der ständigen Niveauabsenkung an den Ölteppichrändern, wodurch der Ölteppich dünner wird. Es sind vielseitige Bemühungen bekannt, einen solchen Ölteppich zu bekämpfen. Häufig werden chemische Mittel eingesetzt, die das Öl emulgieren, so daß es absinkt und nicht mehr augenscheinlich gesehen werden kann. Dennoch ist das Öl nach wie vor im Wasser vorhanden.

Auch ist es bekannt, daß Öl des Ölteppichs mittels Absaugvorrichtungen abzusaugen. Bei bekannten Systemen wird jedoch stets ein großer Anteil Wasser mit eingesaugt, was zu einer teilweise nicht mehr zu beherrschenden großen Flüssigkeitsmenge führt. Insbesondere sind die zur Zeit erhältlichen Separatoren nicht in der Lage, in der bestehenden kurzen Zeit das Öl von dem mitangesaugten Wasser hinreichend zu trennen.

Eine Vorrichtung, welche die Merkmale der Oberbegriffs des Anspruchs 1 aufweist, ist aus der US- A-4 487 694 bekannt.

Der Erfindung liegt die Aufgabe zu Grunde, eine Vorrichtung zum Bergen von Öl eines Ölteppichs vorzuschlagen, bei welcher die natürliche Trennung des Öls vom Wasser ausgenutzt werden kann.

Die Aufgabe wird gemäß der Erfindung durch die Merkmale des Anspruchs 1 gelöst. Die Erfindung nutzt hierbei die natürliche vorhandene Trennschicht zwischen dem Ölteppich einerseits und dem sich darunter befindenden Wasser anderseits aus. Untersuchungen haben gezeigt, daß diese Trennschicht zwischen Wasser und Öl relativ stabil, jedoch empfindlich gegen schnelle und ruckartige Bewegungen ist. Aus diesem Grund haben die bislang bekannten Absaugverfahren auch nicht zu einem Erfolg geführt.

Bei der Vorrichtung gemäß der Erfindung wird das in den Einlauf einströmende Öl nahezu selbständig von dem Wasser getrennt. Der Trennkörper ist dabei so ausgebildet, daß er die Strömung nicht behindert. Durch das Abführen des Öls aus dem oberen Abflußbereich auch in einem Abstand zur Trennkante des Trennkörpers im oberen Abflußbereich entsteht ein Sog, der dazu führt, daß immer mehr Öl des Ölteppichs in den Einlauf eingezogen wird, ohne jedoch eine örtliche Saugstelle zu bilden. Bei einer ausreichend weiten Entfernung der Absaugeinrichtung zur vorderen Trennkante des Trennkörpers wird eine Zerstörung der natürlichen Trennschicht zwischen Wasser und Öl vermieden, so daß diese natürlich erfolgte Trennung ausgenutzt werden kann.

Bei der Vorrichtung gemäß der Erfindung muß demnach der Trennkörper auf dem Niveau der Trennschicht zwischen Wasser und Öl ausgerichtet werden. Es ist vorgesehen, daß das spezifische Gewicht des Trennkörpers kleiner als Wasser und größer als Öl und so bemessen ist, daß dieser sich selbsttätig auf dem Niveau der Trennschicht ausrichtet. Hier wird eine physikalische Eigenschaft ausgenutzt, nämlich das ein Körper, dessen spezifisches Gewicht leichter ist als eine schwerere Flüssigkeit und schwerer ist, als eine leichtere Flüssigkeit sich stets auf dem Niveau der Trennschicht zwischen diesen Flüssigkeiten einpendeln wird. Dies ist vollkommen unabhängig von den spezifischen Gewichten und Höhen und Tiefen der jeweiligen Flüssigkeiten. Ein Trennkörper mit diesen Eigenschaften bleibt bei ausreichend dickem Ölteppich stets auf dem Niveau der Trennschicht zwischen Wasser und Öl, unabhängig davon, welche Schichtdicke der Ölteppich tatsächlich aufweist.

Es kann auch ein zweiter Schwimmkörper vorgesehen sein, dessen spezifisches Gewicht leichter als Wasser und schwerer als Öl ist, und das die Position dieses zweiten Schwimmkörpers zur Überwachung und/oder zur Korrektur und/oder zur Einstellung der Position des Trennkörpers im Kanal herangezogen wird. Auch hier wird ausgenutzt, daß sich der zweite Schwimmkörper stets auf dem Niveau der Trennschicht befindet und somit ein Stellsignal für motorische Mittel zum Einstellen der Position des Trennkörpers liefern kann.

Es kann vorgesehen werden, daß der zweite Schwimmkörper und der Trennkörper im wesentlichen das gleiche spezifische Gewicht aufweisen. Das spezifische Gewicht des Trennkörpers kann beispielsweise 850 bis 950, insbesondere 900 Kg/m³ betragen. Ein gewähltes spezifisches Gewicht von 900 Kg/m³ führt dazu, daß sich der Trennkörper bei vielen Havarieölen annähernd mittig auf dem Niveau der Trennschicht zwischen Wasser und Öl befindet. Der Trennkörper kann aus Polypropylen bestehen, dessen spezifisches Gewicht bei 900 Kg/m³ liegt. Die Verwendung eines derartigen Kunststoffes hat zudem den Vorteil, daß dieser unempfindlich gegenüber Meerwasser einerseits und Öl anderseits ist.

Für die Erzeugung eines ausreichenden Sogs, der dazu führt, daß der Ölteppich in den Einlauf strömt, ist es erforderlich, daß das Öl oberhalb des Trennkörpers kontinuierlich oder zumindest quasi-kontinuierlich abgeführt wird. Es kann vorgesehen werden, daß der obere Ablauf mit einer aktiven Saugvorrichtung in Verbindung steht, die das Öl absaugt. Hier kann ein Problem jedoch darin bestehen, daß durch die Saugvorrichtung auch bei beabstandeter Anordnung zur Trennkante eine Verwirbelung entsteht, die die dahingehend empfindliche Trennschicht zwischen Wasser und Öl zerstört.

Gemäß einer besonders bevorzugten Ausführungsform der Erfindung ist daher vorgesehen, daß die Saugvorrichtung ein Sturzgefälle umfaßt, das durch einen eintauchenden Schacht gebildet wird, dessen obere Kante mit dem Trennkörper in Verbindung steht. Durch eine derartige Maßnahme wird eine Strömung erzeugt, die sich stets nach der vorhandenen Menge des nachfließenden Öl bemißt. Bei einer größeren Ölmenge wird mehr Öl abgetrennt und stürzt in den eintauchenden Schacht. Es entsteht ein größerer Sog, der zu einer verstärkten Nachströmung des Ölteppichs führt. Bei einer geringeren Menge Öls, beispielsweise bei einer geringeren Dicke des Ölteppichs, wird sich ein entsprechend geringerer Sog einstellen. Eventuelle Nachregelungen von Saugpumpen oder dergleichen sind nicht erforderlich. Auch ist nicht zu befürchten, das zuviel Wasser mit dem Öl abgezogen wird, da durch den oben erläuterten Trennkörper sich oberhalb desselben nur Öl befindet.

Zum Abführen des in den Schacht einstürzenden Öls kann eine Pumpe vorgesehen werden, die das in den Schacht einströmende Öl in geeignete Behälter abpumpt. Diese Pumpen befindet sich in einer hinreichenden Entfernung zur Trennschicht und pumpt zudem auch nur abgezogenes Öl, so daß eine Zerstörung der Trennschicht durch diese Pumpe nicht zu befürchten ist.

Der Trennkörper steht über ein elastisches Element mit dem Schacht für das Sturzgefälle in Verbindung. Dabei ist der Trennkörper als im wesentlichen flache Platte ausgebildet, die sich im wesentlichen horizontal zwischen den Seitenwandungen des Kanals erstreckt. Dadurch wird eine Teilung des Kanals auf dem Niveau der Trennschicht zwischen Wasser und Öl bewirkt. Durch die flache Platte wird die Strömung nicht behindert, sondern lediglich geteilt, so daß gute Trennergebnisse bei hohem Durchsatz erzielt werden können.

Es kann zweckmäßig sein, wenn der Trennkörper in einer Kulissenführungen relativ zu den Seitenwandungen des Kanals vertikal hin- und her bewegbar ist. Dabei ist es besonders zweckmäßig, wenn der Trennkörper entgegen der Strömung gehalten ist. Dadurch wird erreicht, daß sich der Trennkörper im wesentlichen horizontal und parallel zur Trennschicht zwischen Wasser und Öl ausrichtet. Es wird somit die Gefahr vermieden, daß der Trennkörper durch größere schwimmende Teile ausgelenkt wird und entweder vollständig oberhalb des Ölteppichs oder unter Wasser gelangt.

Es ist zweckmäßig, wenn die vordere, dem Ölteppich zugewandte Trennkante des Trennkörpers so ausgerichtet ist, daß sie geringfügig unterhalb der Trennschicht zwischen Öl und Wasser verläuft. Dadurch wird erreicht, daß der Ölteppich vollständig entfernt werden kann. Das geringfügig mit abgeführte Wasser stellt nur einen geringen Gewichtsanteil dar, der zu vernachlässigen ist. Wichtig ist, das die See hinter der Vorrichtung dann im wesentlichen frei von dem Öl des Ölteppichs ist.

Gemäß einer weitergehenden Ausführungsform der Erfindung ist vorgesehen, daß die ersten Schwimmkörper die Vorrichtung derart tragen, daß diese dem großen Wellengang im wesentlichen folgt. Es ist offensichtlich, daß die Wirksamkeit der Trennung zwischen Öl und Wasser insbesondere von der möglichst genauen Ausrichtung des Trennkörpers entlang der Trennschicht zwischen Wasser und Öl abhängt. Es ist daher erforderlich, daß die Vorrichtung dem Wellengang folgen kann, um den Trennkörper überhaupt in den Bereich der Trennschicht bringen zu können. Eine zu schwere Vorrichtung hätte zur Folge, daß diese dem Wellengang nicht mehr folgen kann und der Ölteppich über die Vorrichtung hinwegschwappen könnte. Es ist daher erforderlich, daß die Vorrichtung insgesamt relativ leicht ausgebildet ist, so daß sie dem großen Wellengang folgen kann. Es ist hierbei zu beachten, daß die Vorrichtung für eine wirksame Arbeitsweise im Bereich des Einlaufs eine Spannweite von wenigstens 30 - 50 Meter, vorzugsweise aber 50 bis 100 oder 200 Meter und mehr aufweisen kann. Auch kann die Vorrichtung mit herkömmlichen Ölsperren kombiniert werden.

Es ist offensichtlich, daß durch die entsprechende Ausbildung der ersten Schwimmkörper die Vorrichtung dem großen Wellengang folgen kann. Diesem großen Wellengang sind jedoch kleinere Wellen überlagert, die es ebenfalls auszugleichen gilt. Es ist daher weiterhin vorgesehen, daß der Kanal durch wenigstens einen dritten Schwimmkörper auf dem Wasser getragen wird und relativ zum Einlauf beweglichen gehalten ist. Die dritten Schwimmkörper sind dabei so bemessen, daß der Kanal dem überlagerten Wellengang folgen kann. Es ist offensichtlich, daß durch diese getrennte Ausbildung von Ölkanal einerseits und Einlauf andererseits der Trennkörper mit großer Zuverlässigkeit zunächst in den Bereich des Niveaus der Trennschicht zwischen Wasser und Öl gebracht werden kann. Durch die Wahl des spezifischen Gewichts des Trennkörpers wird dann erreicht, daß sich dieser unabhängig von der Schichtdicke des Ölteppichs exakt auf der Trennschicht ausrichten kann. Schließlich führt dies dazu, daß die Vorrichtung auch bei mittlerem und schwerem Wellengang eingesetzt werden kann, so lange die Vorrichtung dem Wellengang folgen kann. Das Trennergebnis wird hiervon nicht oder nur unwesentlich beeinflußt.

Für ein einwandfreies Funktionieren der Vorrichtung ist es vorteilhaft, wenn die Trennschicht zwischen Wasser und Öl möglichst ungestört bis hin zum Sturzgefälle geführt werden kann. Einbauten im Bereich des Einlaufs sind dazu hinderlich. Es ist daher gemäß einer weitergehenden Ausführungsform der Erfindung vorgesehen, daß der Einlauf aus schwimmenden Begrenzungskörpern gebildet ist, die durch eine Seilverspannung in der geöffneten Position gehalten sind. Diese Seilverspannung kann oberhalb des Ölteppichs verlaufen, so daß eine Beeinflussung nicht zu befürchten ist.

Weiterhin kann es zweckmäßig sein, wenn die Begrenzungskörper gegeneinander beweglich sind. Dadurch wird erreicht, daß die beiden teilweise sehr langen Ausleger, die den trichterförmigen Einlauf bilden, sich dem Wellengang angleichen können und ein Aufschlagen der Begrenzungskörper auf den Ölteppich oder ein Untertauchen vermieden werden kann. Die Vorrichtung verhält sich somit wie der Ölteppich, und eine Zerstörung der für das Abziehen des Öls wichtigen Trennschicht zwischen Öl und Wasser wird vermieden.

Der Ölteppich als solcher wird jedoch nicht nur durch den Wellengang beeinflußt. Vielmehr spielt auch der Wind eine große Rolle, die zu einem mehr oder weniger ausgeprägten Aufwühlen des Ölteppichs führen kann. Um die Abtrennung im wesentlichen unempfindlich gegen Wind auszubilden, ist vorgesehen, daß zumindest der Kanal durch wenigstens einen Deckel oben geschlossen ist. Dies hat den Vorteil, daß der Wind nicht mehr auf die Ölschicht einwirken kann.

Es können ferner vierte Schwimmkörper vorgesehen werden, die auf dem Ölteppich aufschwimmen und mit dem Deckel winddicht verbunden sind und zumindest einen Teil des Einlaufs und/oder der Mündung des Kanals oberhalb des Ölteppichs verschließen. Hierdurch wird erreicht, daß der Wind nicht mehr in den Kanal hineinblasen kann. Eine noch bessere Beruhigung des Ölteppichs kurz vor dem Sturzgefälle wird dadurch erreicht, so daß das Trennergebnis noch weiter verbessert werden kann. Hierbei ist es zweckmäßig, wenn die vierten Schwimmkörper über wenigstens einen Faltenbalg elastisch mit dem Deckel verbunden sind. Hierdurch kann der Wellengang zwischen dem vierten Schwimmkörper einerseits und dem Deckel andererseits ausgeglichen werden.

Grundsätzlich wird es erforderlich sein, daß die Vorrichtung zum Ölteppich hin ausgerichtet wird. Es ist jedoch offensichtlich, daß jeder Antrieb eine Zerstörung des Ölteppichs beziehungsweise der Trennschicht zwischen Öl und Wasser bewirken wird. Um dies zu vermeiden ist gemäß der Erfindung vorgesehen, daß die Vorrichtung mit einem Antrieb auf der dem Einlauf abgekehrten Seite des Kanals versehen ist. Der Antrieb kann zudem weit unterhalb der Trennschicht angeordnet werden, so daß eine Zerstörung der Trennschicht zwischen Öl und Wasser nicht zu befürchten ist. Der Antrieb dient zum Ausrichten, Aufpositionhalten und zur Fortbewegung der Vorrichtung bei relativ kleinen Geschwindigkeiten. Der Antrieb kann entsprechend klein dimensioniert sein.

Weiterhin kann wenigstens ein weiterer Antrieb vorzugsweise an den Enden der Ausleger, die den Einlauf bilden, vorgesehen sein. Dieser Antrieb kann unter der Trennschicht angeordnet sein und ermöglicht ein Verdrehen der Vorrichtung. Auch hierdurch wird die Trennschicht nicht zerstört.

Es ist zu beachten, daß die Vorrichtung, insbesondere aufgrund des relativ leichten Aufbaus, nicht in der Lage sein wird, selbsttätig größere Entfernungen auf See zurück zu legen. Auch ist eine größere Geschwindigkeit, die teilweise zum zügigen Erreichen des Ölteppichs erforderlich ist, nicht möglich. Es ist daher gemäß der Erfindung weiterhin vorgesehen, daß die Vorrichtung in Teile zerlegbar ist, die in vorteilhafter Weise in das ISO-Rastermaß von Euro-Containern passen. Dadurch wird erreicht, daß die zerlegte Vorrichtung mittels eines entsprechenden Transportschiffes schnell zu dem Ölteppich gebracht werden kann. In besonders eiligen Fällen kann dies auch mittels Hubschrauber erfolgen. Der Aufbau vor Ort kann schnell erfolgen, so daß eine zeitnahe Bergung des Öls möglich wird.

Es ist offensichtlich, daß durch die Vorrichtung gemäß der Erfindung weitestgehend lediglich das Öl vom Wasser abgezogen wird, ohne daß eine zu große Menge Ballastwasser mit abgeführt wird. Dennoch muß die geführte Menge Öl vom Wasser getrennt gelagert und abtransportiert werden. Im Fall der Havarie eines normalen Transportschiffes, bei dem lediglich der Treibstoff ausläuft, ist die Menge des geborgenen Öl beherrschbar. Bei der Havarie eines Öltankers hingegen können Probleme bei der Lagerung und beim Abtransport des geborgenen Öls auftreten. Ein leerer Tanker in der gleichen Größe, wie das havarierte Schiff, wird in der Regel nicht oder nicht in kurzer Zeit verfügbar sein. Das Öl muß daher durch kleinere Schiffe quasi-kontinuierlich abtransportiert werden. Hierdurch entsteht ein Zeitverlust, der sich in einem wachsenden Ölteppich auswirkt, dessen Bergung grundsätzlich schwer ist.

Gemäß der Erfindung ist daher vorgesehen, daß das abgetrennte Öl durch wenigstens eine Pumpe zumindest teilweise in die ersten Schwimmkörper gepumpt wird. Diese Schwimmkörper sind grundsätzlich hohl ausgebildet und können eine relativ große Menge Öl zwischenlagern, bis ein entsprechendes Transportschiff zur Verfügung steht.

Es kann auch zweckmäßig sein, wenn das abgetrennte Öl durch wenigstens eine Pumpe zumindest teilweise in die Begrenzungskörper des Einlaufs gepumpt wird. Auch diese Begrenzungskörper sind hohl ausgebildet und können eine bestimmte Menge Öl aufnehmen. Allerdings ist bei beiden Maßnahmen zu beachten, daß hierdurch die gesamte Vorrichtung schwerer wird, so daß dem Wellengang gegebenenfalls nicht mehr ohne weiteres gefolgt werden kann.

Gemäß einer bevorzugten Ausführungsform der Erfindung ist daher vorgesehen, daß das abgetrennte Öl zumindest teilweise durch eine Pumpe in Behälter gepumpt wird, die unabhängig von der Vorrichtung schwimmen und elastisch mit dieser verbunden sind. Diese Behälter können beispielsweise als Faltbehälter ausgebildet sein und vollständig verschließbar sein. Die gefüllten Behälter werden gesammelt und beispielsweise aneinander gebunden und können später entweder aus dem Wasser vollständig geborgen oder leer gepumpt werden, sobald ein entsprechendes Transportschiff beim Ölteppich angekommen ist. Durch die Möglichkeit einer derartigen Zwischenlagerung kann das Problem des Abtransports nur durch kleinere Schiffe gelöst werden.

Die Erfindung wird im folgenden anhand der schematischen Zeichnung näher erläutert. Es zeigen:
- Fig. 1: die Draufsicht auf eine Vorrichtung gemäß der Erfindung,
- Fig. 2: im Schnitt einen Ölteppich,
- Fig. 3: den Einmündungsbereich des Einlaufs in den Kanal,
- Fig. 4: im Schnitt das Sturzgefälle,
- Fig. 5: die Rückansicht des Kanals gemäß Figur 2,
- Fig. 6: das Sturzgefälle mit der Absaugeinrichtung in vergrößerter Darstellungsform in der Seitenansicht,
- Fig. 7: die Rückansicht des Sturzgefälles in vergrößerter Darstellungsform

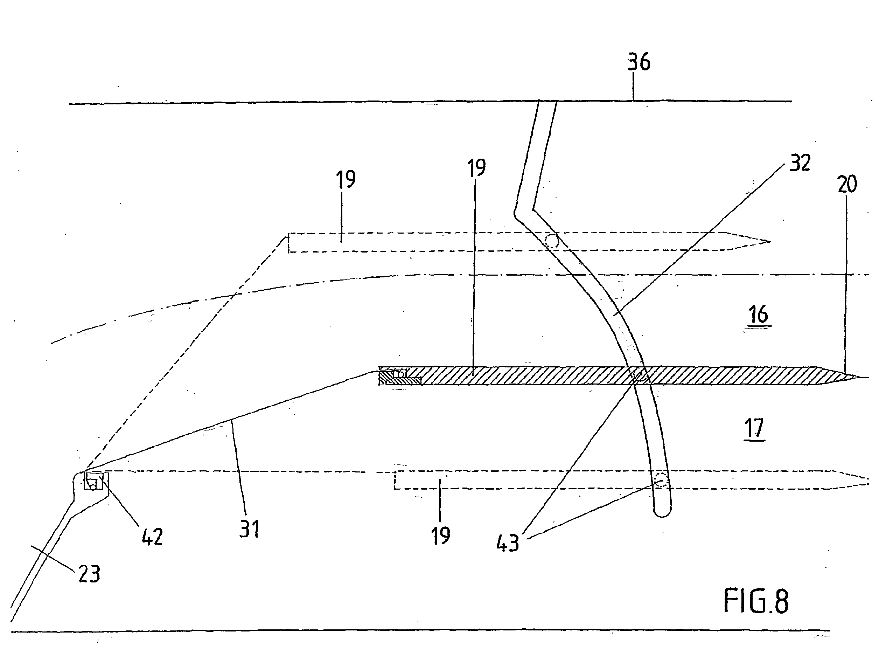

- Fig. 8: die Seitenansicht des Trennkörpers gemäß der Erfindung,
- Fig. 9: die Seitenansicht des Trennkörpers gemäß einer anderen Ausführungsform der Erfindung,

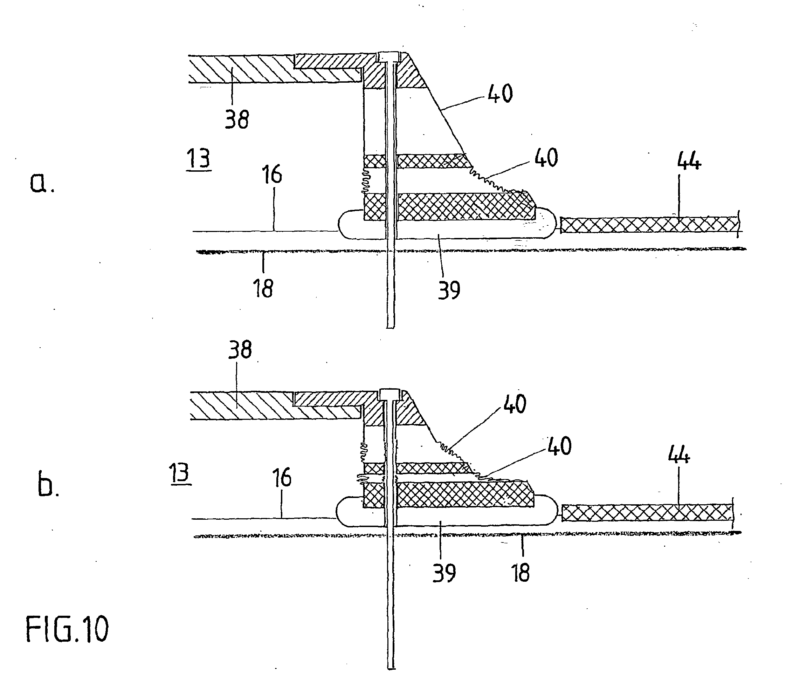

- Fig. 10 a, b: die Seitenansicht der vierten Schwimmkörper zur Windabdichtung in verschiedenen Schwimmpositionen,
- Fig. 11 a, b: ein Schwimmelement zur Bildung des Einlaufs in der Ansicht und in der Draufsicht,
- Fig. 12 a, b: die Draufsicht auf Schwimmelemente in unterschiedlichen Ausführungsformen, und
- Fig. 13: die Draufsicht auf einen durch die Schwimmelemente gemäß den Fig. 11 und 12 gebildeten Einlauf.

Die in der Zeichnung dargestellte Vorrichtung zum Bergen von Öl weist einen Einlauf 11 auf, der durch seitliche schwimmende Begrenzungsschwimmkörper 12 gebildet wird. Der Einlauf 11 mündet in einen Kanal 13 an dessen Ende 14 wenigstens eine Abführeinrichtung für das abgetrennte Öl vorgesehen ist. Der Kanal 13 weist Seitenwandungen 36 auf, die vertikal in das Gewässer eintauchen und somit die Strömung für den Ölteppich und das darunter befindliche Wasser seitlich begrenzen. Dieser Teil der Vorrichtung wird durch erste Schwimmkörper 10 mit vertikaler Relativbewegungsmöglichkeit geführt und gehalten.

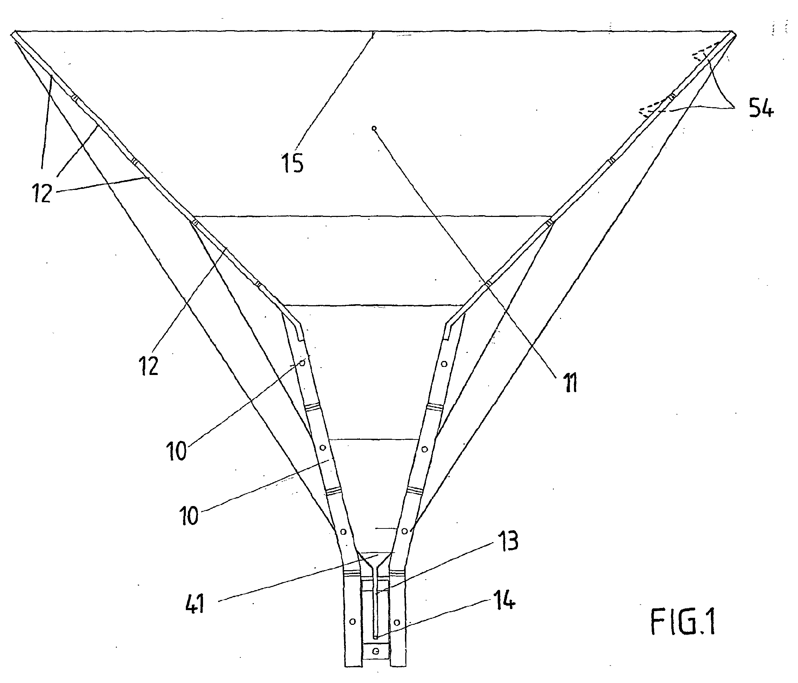

Wie insbesondere aus Figur 1 ersichtlich, besteht die gesamte Vorrichtung im wesentlichen aus miteinander verbundenen Schwimmkörpern 10, 12, die vorzugsweise gegen einander beweglich befestigt sind. Um den Einlauf in der dargestellten aufgespannten Lage zu halten, sind Spannseile 15 vorgesehen, die sich oberhalb des Ölteppichs erstrecken und die gesamte Vorrichtung auf Zug in der gewünschten und in Figur 1 dargestellten Form halten.

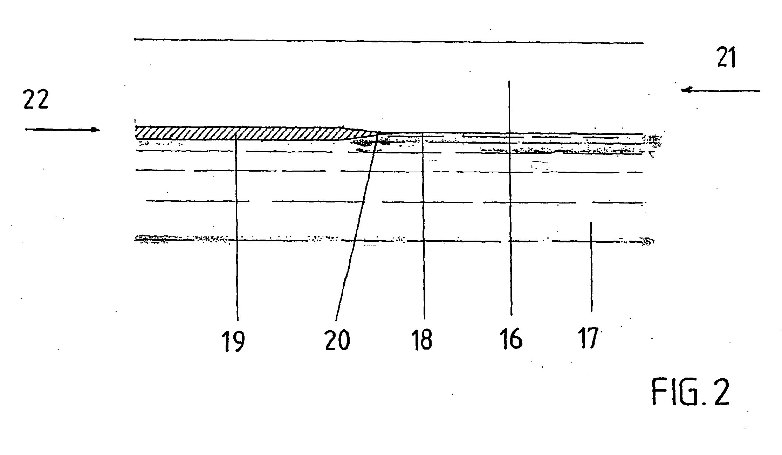

Durch die gezeigte Vorrichtung kann das Öl eines Ölteppichs in einfacher Weise von dem sich darunter befindlichen Wasser abgetrennt werden. Es wird hierbei ausgenutzt, daß sich zwischen Wasser und Öl eine relativ stabile Trennschicht ausbildet, die lediglich empfindlich gegenüber schnellen Bewegungen, wie Verwirbelungen, ist. Das Prinzip ist schematisch in Figur 2 dargestellt. Es ist ein Ölteppich 16 vorhanden, der auf dem Wasser 17 eines Gewässers beliebiger Art aufschwimmt. Dies liegt daran, daß das Öl in der Regel ein geringeres spezifisches Gewicht aufweist als Wasser. Wird nun ein Trennkörper 19 vorgesehen, dessen vordere Begrenzungskante 20 auf dem Niveau der Trennschicht 18 ausgerichtet ist, würde eine Strömung in Richtung des Pfeiles 21 oder eine Bewegung des Trennkörpers 19 in Richtung des Pfeiles 22 eine Abtrennung des Ölteppichs 16 von dem Wasser 17 bewirken. Eine Bewegung des Trennkörpers 19 hat jedoch den Nachteil, daß die bezüglich solchen Bewegungen relativ empfindliche Trennschicht zerstört werden würde. Eine saubere Trennung von Öl und Wasser wäre eventuell nicht mehr möglich. Bewegt sich hingegen der Ölteppich selbst in Richtung auf die Kante 20, erfolgt keine Zerstörung der Trennschicht. Diese Erkenntnis nutzt die Vorrichtung dahingehend aus, daß am Ende des Kanals 13 stets das Öl abgezogen wird, so daß ein Sog entsteht, der den Ölteppich dazu veranlaßt, sich selbst in Richtung auf die Trennkante 20 des Trennkörpers 19 zu bewegen. Es ist lediglich erforderlich, daß der Trennkörper 19 stets auf dem Niveau der Trennschicht 18 gehalten wird.

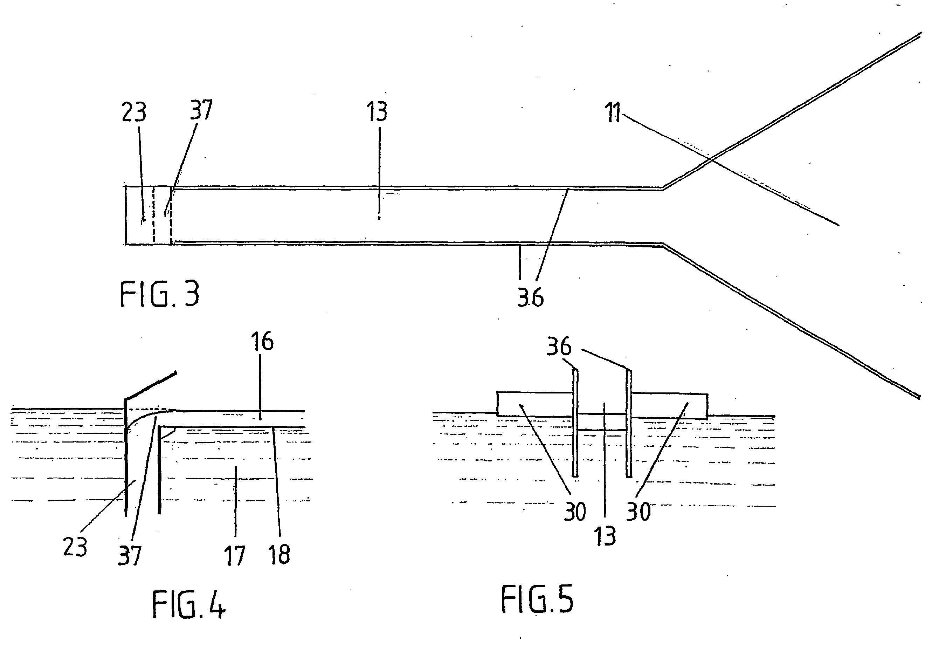

Figur 4 zeigt eine mögliche Ausführungsform der Erzeugung eines Sogs in einem sogenanntem Sturzgefälle 37. Es ist ein Schacht 23 vorgesehen, der sich an den Trennkörper 19 anschließt. Das über den Trennkörper 19 abfließende Öl 16 fällt in den Schacht und erzeugt somit einen Sog, der das nachfolgende Öl anzieht. Da sich die Vorrichtung im wesentlichen vollständig im Ölteppich befindet, ist stets ausreichend Öl vorhanden, das nachfließen kann. Das aufschwimmende Öl des Ölteppichs wird somit vollständig getrennt und fließt selbsttätig in den Schacht. Es ist lediglich erforderlich, das einströmende Öl aus dem Schacht zu entfernen, damit kein Rückstau entstehen kann.

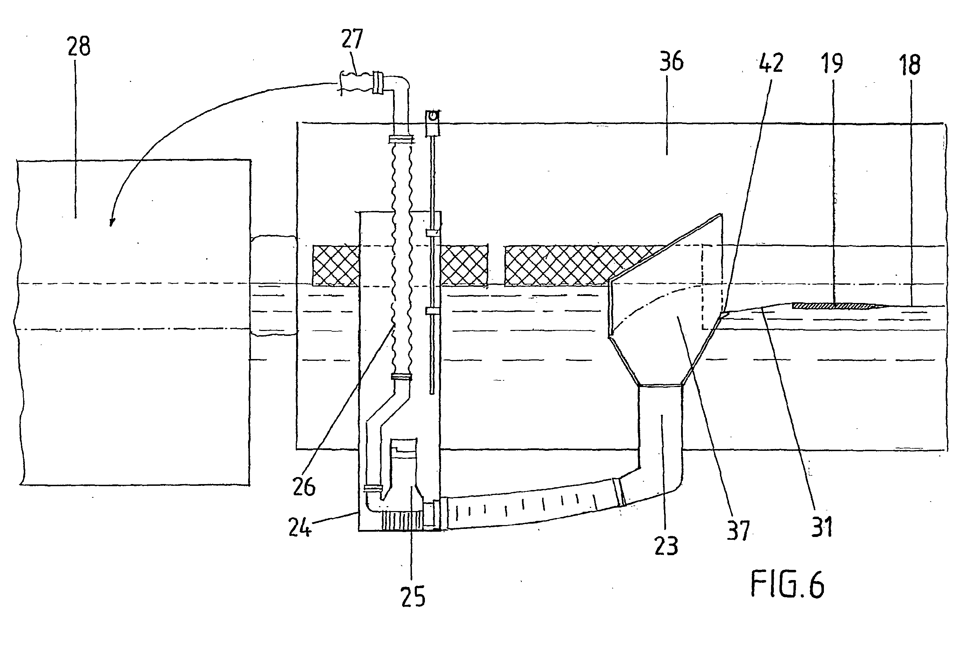

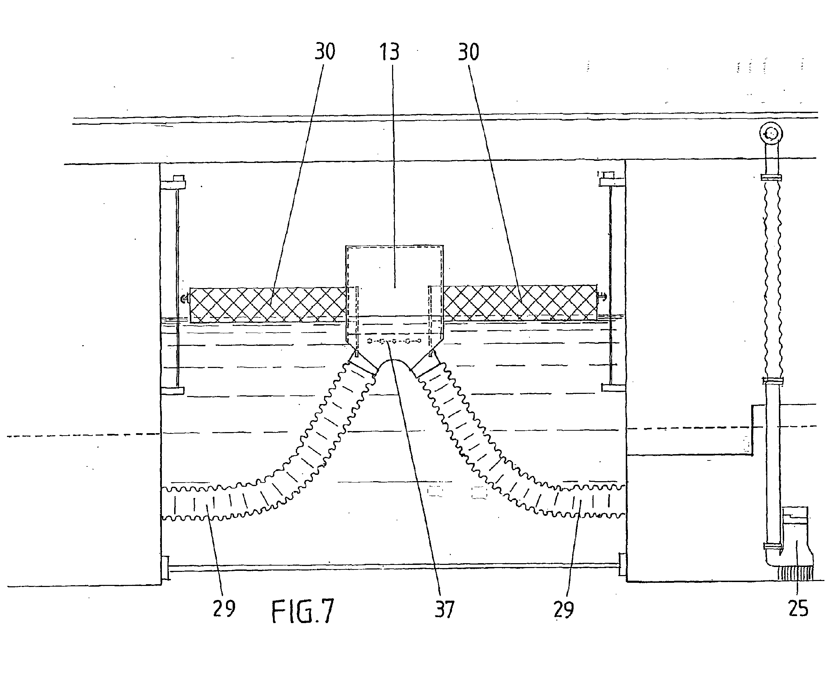

In den Figuren 6 und 7 ist die gesamte Abführeinrichtung für das durch das Sturzgefälle abgezogene Öl schematisch dargestellt. Es ist der Trennkörper 19 ersichtlich, der entlang der Trennschicht 18 zwischen Wasser und Öl ausgerichtet ist. Das in den Schacht 23 einstürzende Öl gelangt in einen Behälter 24, in dem wenigstens eine Tauchpumpe 25 angeordnet ist. Diese Tauchpumpe fördert das Öl über vorzugsweise elastische Leitungen 26, 27 in nicht näher dargestellte Behälter 28. Diese Behälter 28 können beispielsweise die Hohlräume der Begrenzungskörper 12 oder der Schwimmkörper 10 sein. Es kann jedoch auch vorgesehen werden, daß die Behälter 28 vollkommen getrennt von der Vorrichtung hinter derselben auf See schwimmen und nach dem Befüllen vollständig verschlossen und von der Vorrichtung getrennt gesammelt werden.

Es ist nicht zwingend erforderlich, daß der Schacht 23 aus einem starren Gebilde besteht. Es kann auch, wie aus Figur 7 ersichtlich, vorgesehen werden, daß der Schacht durch elastische Schläuche 29 gebildet wird, die sich unterhalb des Niveaus der Trennschicht erstrecken, so daß das erforderliche Sturzgefälle erzeugt wird. Hierdurch kann eine wirksame Trennung des Öls vom Wasser bewirkt werden, so lange der Trennkörper 19 hinreichend genau auf dem Niveau der Trennungslinie 18 gehalten wird.

Um eine möglichst genaue Ausrichtung des Trennkörpers 19 auf dem Niveau der Trennschicht 18 zu erreichen, ist zunächst vorgesehen, daß die Schwimmkörper 10, 12 so ausgebildet und bemessen sind, daß die gesamte Vorrichtung dem großen Wellengang folgen kann. Durch die bewegliche Verbindung der einzelnen Schwimmkörper 10, 12 untereinander wird zudem bewirkt, daß sich die gesamte Vorrichtung elastisch an den Wellengang anpassen kann. Es wird somit vermieden, daß einzelne Teile der Vorrichtung auf den Teppich aufschlagen oder von diesem überströmt werden, wodurch sich eine Zerstörung der empfindlichen Trennschicht einstellen könnte. Weiterhin ist vorgesehen, daß der Kanal 13 durch separate dritte Schwimmkörper 30 gehalten wird, und unabhängig von der Bewegung der Vorrichtung an dieser gelagert ist. Dadurch wird erreicht, daß der Kanal relativ zu der Gesamtvorrichtung vertikal beweglich bleibt und auch den kleinen Wellen folgen kann, die dem großen Wellengang überlagert sind. Damit wird erreicht, daß sich der Kanal unabhängig von der Gesamtvorrichtung im Bereich des Ölteppichs befindet. Der Kanal mit dem Sturzgefälle 37 ist somit bereits im Bereich der Trennschicht, so daß der Trennkörper 19 stets auf dem Niveau der Trennschicht 18 gehalten werden kann. Die Auslegung der betreffenden Schwimmkörper ist demnach so getroffen, daß sich Kanal stets auf dem gleichen Wellenberg beziehungsweise in dem gleichen Wellental befindet, wie die ersten Schwimmkörper 10 der Vorrichtung.

Zum genauen Ausrichten des Trennkörpers 19 auf dem Niveau der Trennschicht 18 besteht dieser aus einem Material, dessen spezifisches Gewicht leichter als das von Wasser und schwerer als das von Öl ist. Insbesondere kann der Trennkörper 19 aus Polypropylen bestehen, das ein spezifisches Gewicht von 900 Kg/m³ besitzt. Gemäß den physikalischen Gesetzen befindet sich der Trennkörper 19 dann stets zwischen den beiden Schichten 16, 17 und somit im wesentlichen exakt auf dem Niveau der Trennschicht 18. Durch einen solchen Trennkörper wird erreicht, daß sich dieser selbsttätig und unabhängig von den jeweiligen Schichtdicken und unabhängig von der relativen Lage des Kanals 13 zum Ölteppich entlang der Trennschicht 18 ausrichten kann.

Der Trennkörper ist vorzugsweise als ebene Platte ausgebildet, die in dem Kanal in einer im wesentlichen horizontalen Lage auf- und abbewegbar geführt ist. Damit wird erreicht, daß der Ölteppich auf der Oberseite und das Wasser auf der Unterseite des Trennkörpers fließt, ohne daß eine Zerstörung der Trennlinie erfolgt. Die Dicke des Trennkörpers ist ein Maß der Eintauchtiefe in das Wasser und der Höhe, mit der dieser in das Öl eindringt. Ein möglichst flacher Körper, der sich vorzugsweise nach vorne verjüngt, ist daher günstig. Dennoch muß die Dicke so gewählt sein, daß der Trennkörper ausreichend starr bleibt. Eine Dicke von 1,0 bis 3,0 cm wird ausreichend sein. Ferner kann durch das spezifische Gewicht die Eintauchtiefe ausgewählt werden. Ein Trennkörper mit einem spezifischen Gewicht nahe bei Wasser taucht tiefer ein, während ein leichterer Trennkörper mehr in die Ölschicht hineinragt. Es kann zweckmäßig sein, daß der Trennkörper fast vollständig im Wasser eintaucht, so daß das aufschwimmende Öl keine oder nur eine unwesentliche Umlenkung erfährt. Die Verjüngung kann dann asymmetrisch sein derart, daß sich der Trennkörper nach vorne oben verjüngt. Die empfindliche Trennlinie wird somit kaum beeinflußt.

Der Trennkörper 19 ist vorzugsweise über ein elastisches Zwischenelement 31 an dem Schacht 23 angelenkt. Dadurch wird erreicht, daß die Oberkante 42 des Schachtes stets in Verbindung mit dem oberen Bereich des Trennkörpers 19 steht, so daß ausschließlich Öl in den Schacht gelangen kann. Ferner ist der Trennkörper flach ausgebildet, so daß kein großer Strömungswiderstand beim Umströmen erzeugt wird. Es wird eine fast vollständige Trennung erreicht, da sich der Trennkörper zwischen den Seitenwandungen 36 des Kanals erstreckt und die Strömung nur oberhalb und unterhalb des Trennkörpers abfließen kann. Unterhalb des Trennkörpers ist hinter der Vorrichtung keine Begrenzung vorgesehen, so daß das Wasser 17 ungehindert weiter fließen kann. Oberhalb des Trennkörpers wird das Weiterfließen künstlich durch Entfernen des Öls aus dem Schacht des Sturzgefälles erzeugt. Die Strömung fließt demnach ungehindert weiter, nur, daß das Öl vom Wasser abgeschält worden ist.

Es ist weiterhin vorgesehen, daß der Trennkörper 19 über seitliche Vorsprünge 43 in einer Kulissenführung 32 am Kanal gehalten wird. Durch die Kulissenführung wird weiterhin erreicht, daß der Trennkörper 19 entgegen der Strömungsrichtung relativ fest gehalten ist. Dies hat den Vorteil, daß der Trennkörper 19 sich nicht aufrichten kann.

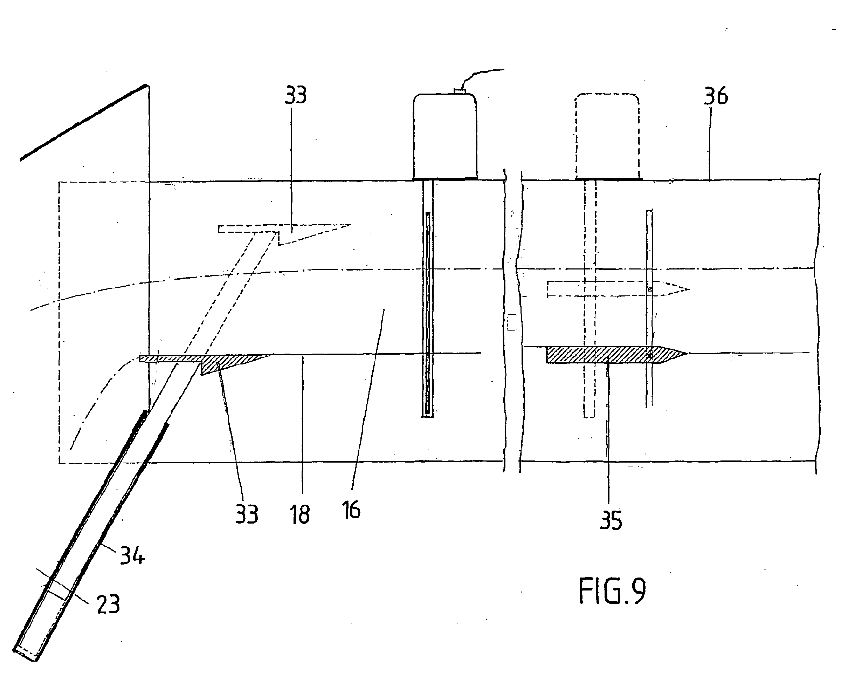

In Figur 9 ist eine andere Art der Ausrichtung eines Trennkörpers 33 gezeigt. Der Trennkörper ist in einer Linearführung 34 auf- und abbewegbar gehalten. Die Bewegung kann aufgrund des gewählten spezifischen Gewichts des Trennkörpers erfolgen. Es kann aber auch vorgesehen werden, daß die Lage des Trennkörpers motorisch eingestellt wird. Es kann ein zweiter Schwimmkörper 35 vorgesehen sein, dessen spezifisches Gewicht zwischen dem von Wasser und Öl liegt. Der zweite Schwimmkörper richtet sich demnach an der Trennschicht 18 aus und kann ein Stellsignal für die motorischen Mittel liefern. Dieser Schwimmkörper 35 befindet sich dafür in Strömungsrichtung vor dem Trennkörper. Der Trennkörper wird somit aktiv auf dem Niveau der Trennschicht gehalten. Insbesondere ist es hiermit möglich, den Trennkörper rechtzeitig auf eine neue Lage der Trennschicht einzustellen, die laufenden Änderungen unterliegt. Die motorischen Mittel können elektrisch, hydraulisch oder pneumatisch arbeiten. Auch kann vorgesehen werden, daß durch einen derartigen unabhängigen zweiten Schwimmkörper 35 die Position des Trennkörpers 33 überwacht und eventuell nachgeregelt wird.

Die Wahl des spezifischen Gewichts des Trennkörpers 19 hängt auch von der Art des Öls im Ölteppich ab. Es kann vorgesehen werden, daß der Trennkörper 19 lösbar in dem Kanal gehalten ist, um unterschiedliche Trennkörper mit unterschiedlichem spezifischen Gewicht montieren zu können. Auch kann vorgesehen werden, daß der Trennkörper 19 mit entsprechenden Gewichten, vorzugsweise unterhalb desselben, bestückt werden kann, um dessen spezifisches Gewicht zu erhöhen. Es hat sich jedoch gezeigt, daß die Verwendung eines Trennkörpers 19 aus Polopropylen für die meisten Fälle ausreichend sein wird.

Bei dem in der Zeichnung dargestellten Ausführungsbeispiel ist die vordere Trennkante 20 relativ spitz ausgebildet. Damit kann eine Abtrennung der übereinander liegenden Schichten ohne Verwirbelungen ermöglicht werden. Es ist vorteilhaft, wenn diese vordere Trennkante 20 etwas unterhalb der Trennschicht 18 ausgerichtet ist, um ein vollständiges Abtrennen des Öls 16 vom Wasser 17 zu ermöglichen. Das abgetrennte Öl 16 enthält somit zwar einen geringen Wasseranteil, der jedoch im Verhältnis zum abgetrennten Öl relativ gering und somit vernachlässigbar ist.

Es kann weiterhin vorgesehen werden, daß zumindest der Kanal 13 und/oder der Mündungsbereich 41 mit einem Deckel 38 versehen ist, um eine Beeinflussung des Ölteppichs durch Wind zu verhindern. Der Deckel kann sich auch über einen weiteren Bereich des Einlaufs 11 erstrecken. Es können ferner Schwimmkörper 39 vorgesehen sein, die mit dem Deckel 38 winddicht verbunden sind und auf dem Ölteppich schwimmen ohne wesentlich einzutauchen. Diese Schwimmkörper 39 können über Faltenbälge 40 an dem Deckel befestigt sein. Dadurch wird vermieden, daß Wind in den Kanal bläst und ein Aufwühlen des Ölteppichs verursacht. Der Ölteppich gelangt beruhigt zur Trennstelle, und das Öl kann optimal abgezogen werden. Auch können unabhängige Schwimmkörper 44 vorgesehen werden, die auf dem Ölteppich schwimmen und so diesen und dessen Oberfläche beruhigen.

Die Vorrichtung gemäß der Erfindung kann für eine wirksame Arbeitsweise eine Spannweite von 50 bis 100 Meter im vorderen Einlaufbereich 11 aufweisen. Die Länge der Vorrichtung kann somit ebenfalls zwischen 50 und 100 Meter betragen. Es ist offensichtlich, daß eine solche Vorrichtung kaum auf hoher See schnell zu bewegen ist. Es ist daher vorgesehen, daß, wie insbesondere in Figur 1 ersichtlich, die einzelnen Schwimmkörper 10, 12 lösbar miteinander verbunden sind. Die Abmessungen dieser Schwimmkörper sind so bemessen, daß sie problemlos in Euro-Container passen, um schnell an den gewünschten Zielort der Havarie gebracht werden zu können. Vor Ort können die Schwimmkörper 12 schnell miteinander verbunden und durch die Seile 15 verspannt werden, so daß die wirksame Vorrichtung bereitgestellt werden kann. Es ist anschließend nur noch erforderlich, daß abgetrennte Öl abzutransportieren. Dies kann durch entsprechende kleinere und/oder schnellere Transportschiffe erfolgen, die zwischen der Unfallstelle und einer Entsorgungsstelle, beispielsweise einem größeren Tankschiff und/oder der Küste pendeln.

In der Regel wird die Vorrichtung gegen den Wind ausgerichtet sein, der den Ölteppich in Richtung in den Kanal treibt. Durch die Verengung der Breite des Einlaufs erfolgt eine Erhöhung der Dicke des Teppichs, so daß ein Abtrennen desselben gut möglich ist. Es können zur Verbesserung der Strömung des Ölteppichs in Richtung auf den Kanal Windleitelemente 54 zumindest im vorderen, weitesten Bereich des Einlaufs 11 vorgesehen werden, um den Wind in Richtung auf die Mitte abzulenken. Die Windleitelemente sind in Fig. 1 gestrichelt dargestellt. Dadurch kann das Einströmverhalten des Ölteppichs in den Kanal verbessert werden. Die Höhe der Windleitelemente ist vorzugsweise so bemessen, daß ein Eintauchen derselben vermieden wird.

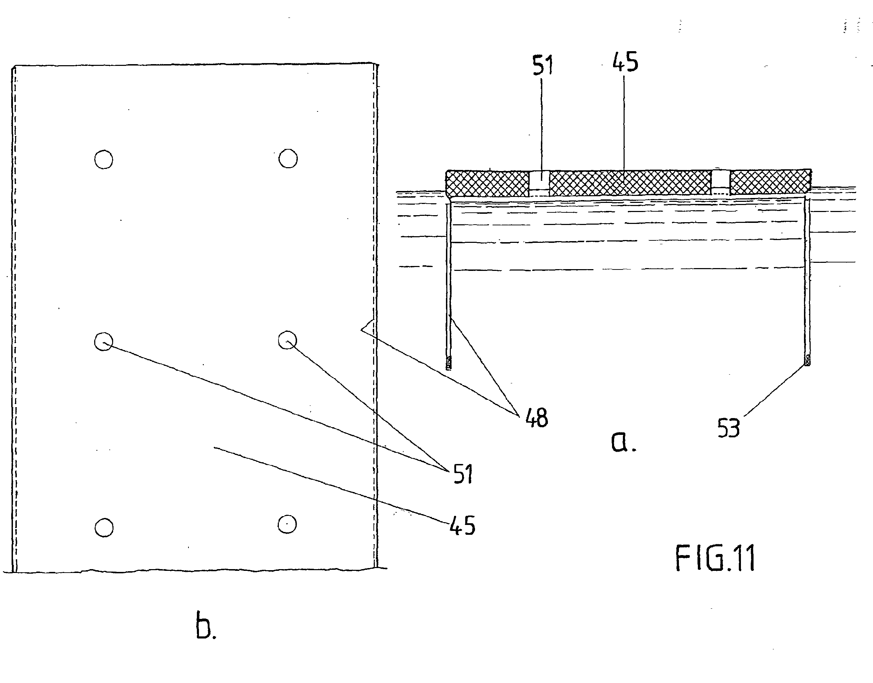

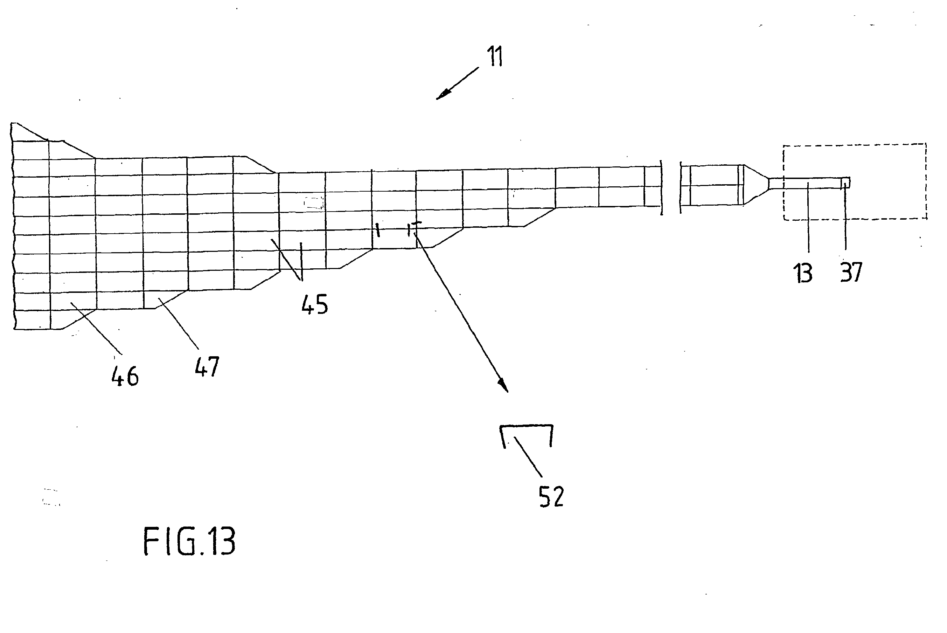

In den Fig. 11 bis 13 ist eine andere Ausführungsform zur Bildung des Einlaufs 11 der Vorrichtung gezeigt. Es sind einzelne Schwimmelemente 45, 46, 47 vorgesehen, die nach unten weisende seitliche Wände 48 aufweisen, die sich relativ weit unter die Trennschicht 18 erstrecken. Es wird somit durch jedes Schwimmelement ein Durchlaß gebildet, der durch die Wände 48 begrenzt wird. Werden mehrere derartige Schwimmelemente im Sinne der Fig. 13 zusammengesetzt, entsteht ein Einlauf, der sich stufenweise bis hin zum Kanal 13 mit dem Sturzgefälle 37 verjüngt.

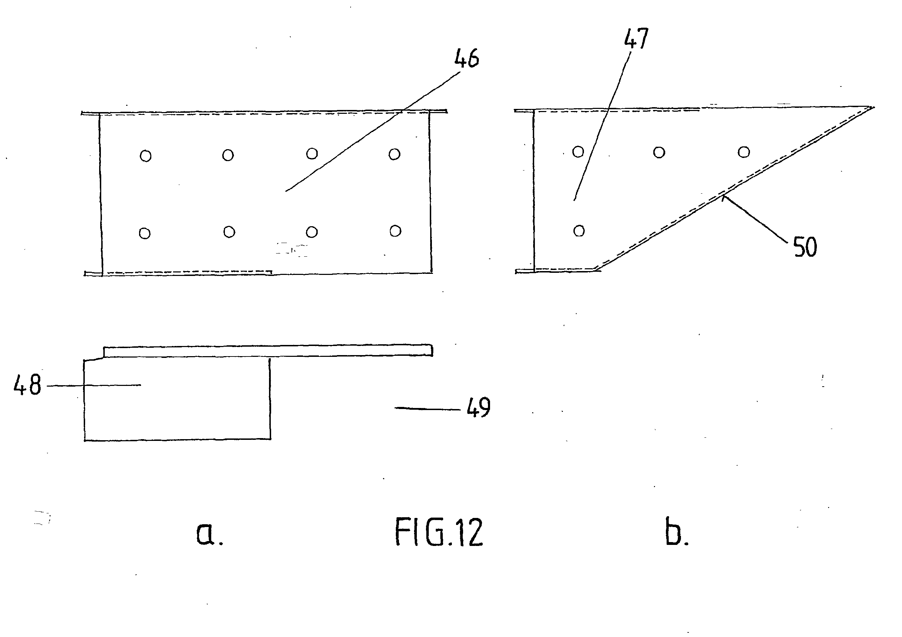

Es sind in der Fig. 12 a, b Anschlußelemente 46 und Randelemente 47 gezeigt, deren Wände Ausklinkungen 49 beziehungsweise einen schrägen Verlauf 50 aufweisen, um den sich verjüngenden Aufbau zu ermöglichen. Die Schwimmelemente 45, 46, 47 können in beliebiger Weise, vorzugsweise beweglich, miteinander verbunden sein. Bei dem gezeigten Ausführungsbeispiel sind auf der Oberseite der Schwimmelemente Durchbrechungen oder Vertiefungen 51 vorgesehen, in die in der zusammengesetzten Lage C-förmige Krallen 52 eingreifen und somit einen vertikal beweglichen, aber horizontal festen Verbund bewirken. Die einzelnen Schwimmelemente können so bemessen sein, daß ein Transport im Container oder per Lastkraftwagen ohne weiteres möglich ist. Auch kann vorgesehen werden, daß die Wände.48 klappbar an dem Schwimmelement 45, 46, 47 gehalten sind und durch Beschwerungen 53 in der schwimmende Lage stets nach unten weisen. Diese Ausführungsform eignet sich insbesondere für den Einsatz in fließenden und schnellfließenden Gewässern.

## Patentansprüche

1. Vorrichtung zum Bergen von Öl eines Ölteppichs auf einem Gewässer, welche Vorrichtung durch wenigstens einen ersten Schwimmkörper (10) auf dem Wasser getragen wird und mit einem Einlauf (11) versehen ist, der auf einer Seite in Richtung auf den Ölteppich offen ist und auf der anderen Seite in einen Kanal (13) mit Seitenwandungen (36) mündet, in dem ein Trennkörper (19) vorgesehen ist, der sich zwischen den Seitenwandungen des Kanals derart erstreckt, dass ein oberer Abflußbereich oberhalb des Trennkörpers und ein davon getrennter unterer Abflußbereich unterhalb des Trennkörpers (19, 33) gebildet werden, wobei die dem Ölteppich zugewandte vordere Trennkante (20) des Trennkörpers im wesentlichen auf dem Niveau der Trennschicht (18) zwischen Wasser (17) und Öl (16) ausgerichtet ist und das Öl aus dem oberen Abflußbereich in einen Schacht eines Sturzgefälles abführbar ist, **dadurch gekennzeichnet, dass** der Trennkörper (19, 33) als flache Platte ausgebildet ist, die sich im wesentlichen horizontal zwischen den Seitenwandungen (36) des Kanals (13) erstreckt und über ein elastisches Element (31) mit dem Schacht (23) des Sturzgefälles in Verbindung steht, wobei das spezifische Gewicht des Trennkörpers (19, 33) leichter als Wasser und schwerer als Öl und so bemessen ist, dass dieser sich selbsttätig auf dem Niveau der Trennschicht (18) ausrichtet.

2. Vorrichtung nach Anspruch 1, **dadurch gekennzeichnet, dass** ein zweiter Schwimmkörper (35) vorgesehen ist, dessen spezifisches Gewicht leichter als Wasser und schwerer als Öl ist, und dass die Position des zweiten Schwimmkörpers zur Überwachung und/oder zur Korrektur und/oder zur Einstellung der Position des Trennkörpers (33) im Kanal herangezogen wird.

3. Vorrichtung nach einem der Ansprüche 1 oder 2, **dadurch gekennzeichnet, dass** der zweite Schwimmkörper (35) und der Trennkörper (33) im wesentlichen das gleiche spezifische Gewicht aufweisen.

4. Vorrichtung nach einem der Ansprüche 1 bis 3, **dadurch gekennzeichnet, dass** das spezifische Gewicht des Trennkörpers (19, 33) zwischen 850 und 950, insbesondere 900 kg/m³ beträgt.

5. Vorrichtung nach einem der Ansprüche 1 bis 4, **dadurch gekennzeichnet, dass** der Trennkörper (19) in einer Kulissenführung (32) relativ zu den Seitenwandungen (36) des Kanals vertikal hin- und herbewegbar ist.

6. Vorrichtung nach einem der Ansprüche 1 bis 5, **dadurch gekennzeichnet, dass** die vordere, dem Ölteppich zugewandte Trennkante (20) des Trennkörpers (19, 33) so ausgerichtet ist, dass sie geringfügig unterhalb der Trennschicht (18) zwischen Öl und Wasser verläuft.

7. Vorrichtung nach einem der Ansprüche 1 bis 6, **dadurch gekennzeichnet, dass** die ersten Schwimmkörper (10) die Vorrichtung tragen derart, dass diese dem großen Wellengang im wesentlichen folgen.

8. Vorrichtung nach einem der Ansprüche 1 bis 7, **dadurch gekennzeichnet, dass** der Kanal (13) durch wenigstens einen dritten Schwimmkörper (30) auf dem Wasser getragen wird und relativ zum Einlauf (11) beweglich gehalten ist, der so bemessen ist, dass der Kanal dem kleinen Wellengang folgt.

9. Vorrichtung nach einem der Ansprüche 1 bis 8, **dadurch gekennzeichnet, dass** der Kanal unten offen ausgebildet ist und der untere Abfluß in die freie See hinter der Vorrichtung mündet.

10. Vorrichtung nach einem der Ansprüche 1 bis 9, **dadurch gekennzeichnet, dass** der Einlauf aus Begrenzungsschwimmkörpern (12) gebildet ist, die durch eine Seilverspannung (15) in der geöffneten Position und beweglich gegeneinander gehalten sind.

11. Vorrichtung nach einem der Ansprüche 1 bis 10, **dadurch gekennzeichnet, dass** der Einlauf aus einer Vielzahl von Schwimmelementen (45, 46, 47) gebildet wird, die jeweils nach unten weisende seitliche Begrenzungswände (48) aufweisen, die sich vertikal bis unter die Trennschicht (18) erstrecken, und welche Schwimmelemente zusammensetzbar sind derart, dass ein seitlich begrenzter Einlauf in Richtung auf den Kanal gebildet wird.

12. Vorrichtung nach Anspruch 11, **dadurch gekennzeichnet, dass** die Begrenzungswände (48) verschwenkbar an den Schwimmelementen (45, 46, 47) gehalten sind.

13. Vorrichtung nach Anspruch 11 oder 12, **dadurch gekennzeichnet, dass** die Begrenzungswände (48) an den freien unteren Ende Beschwerungen (53) aufweisen.

14. Vorrichtung nach einem der Ansprüche 1 bis 13, **dadurch gekennzeichnet, dass** zumindest der Kanal durch wenigstens einen Deckel (38) oben geschlossenen ausgebildet ist.

15. Vorrichtung nach einem der Ansprüche 1 bis 14, **dadurch gekennzeichnet, dass** vierte Schwimmkörper (39) vorgesehen sind, die auf dem Ölteppich aufschwimmen und mit dem Deckel (38) winddicht verbunden sind und zumindest einen Teil des Einlaufs und/oder der Mündung des Kanals oberhalb des Ölteppichs verschließen.

16. Vorrichtung nach Anspruch 15, **dadurch gekennzeichnet, dass** die vierten Schwimmkörper (39) über wenigstens einen Faltenbalg (40) elastisch mit dem Deckel verbunden sind.

17. Vorrichtung nach einem der Ansprüche 1 bis 16, **dadurch gekennzeichnet, dass** der Einlauf (11) auf seiner dem Kanal abgekehrten Seite in Richtung auf die Mitte weisende Windleitelemente (54) aufweist.

## Claims

1. A device for recovering oil from an oil slick on a stretch of water, which device is supported on the water by at least a first float (10) and is provided with an inlet (11) which is open on one side towards the oil slick and on the other side opens into a channel (13) having side walls (36) in which a separating body (19) is provided, which extends between the side walls of the channel in such a manner that an upper outlet region above the separating body and a lower outlet region separated therefrom are formed beneath the separating body (19, 33), with the front separating edge (20) of the separating body facing the oil slick being aligned substantially on the level of the separating layer (18) between the water (17) and the oil (16) and it being possible to carry away the oil from the upper outlet region into a shaft of a drop,
**characterised in that** the separating body (19, 33) is constructed as a flat plate, which extends substantially horizontally between the side walls (36) of the channel (13) and is connected via an elastic element (31) with the shaft (23) of the drop, with the specific weight of the separating (19, 23) being lighter than water and heavier than oil and being dimensioned so that it is automatically aligned to the level of the separating layer (18).

2. A device according to Claim 1,
**characterised in that** a second float (35) is provided, the specific weight of which is lighter than water and heavier than oil,
and **in that** the position of the second float is used to monitor and/or to correct and/or to adjust the position of the separating body (33) in the channel.

3. A device according to one of Claims 1 or 2,
**characterised in that** the second float (35) and the separating body (33) essentially have the same specific weight.

4. A device according to one of Claims 1 to 3,
**characterised in that** the specific weight of the separating body (19, 33) is between 850 and 950, in particular 900 kg/m³ .

5. A device according to one of Claims 1 to 4,
**characterised in that** the separating body (19) can move vertically to and fro in a coulisse (32) relative to the side walls (36) of the channel.

6. A device according to one of Claims 1 to 5,
**characterised in that** the front separating edge (20) of the separating body (19, 33) that faces the oil slick is aligned so that it runs a slight distance beneath the separating layer (18) between the oil and the water.

7. A device according to one of Claims 1 to 6,
**characterised in that** the first floats (10) support the device in such a manner that they essentially follow the large motion of the sea.

8. A device according to one of Claims 1 to 7,
**characterised in that** the channel (13) is supported on the water by at least a third float (30) and is moveably held relative to the inlet (11), which is dimensioned so that the channel follows the small motion of the sea.

9. A device according to one of Claims 1 to 8,
**characterised in that** the channel is constructed to be open at the bottom and the lower outlet opens into the open sea behind the device.

10. A device according to one of Claims 1 to 8,
**characterised in that** inlet is formed from delimiting floats (12) which are held in the open position and moveably in relation to one other by cable bracing (15).

11. A device according to one of Claims 1 to 10,
**characterised in that** the inlet is formed from a plurality of float elements (45, 46, 47), which in each case comprise downwardly pointing lateral boundary walls (48), which extend vertically to beneath the separating layer (18), and which float elements can be assembled in such a manner that a laterally delimited inlet is formed towards the channel.

12. A device according to Claim 11,
**characterised in that** the boundary walls (48) are swivellably held on the float elements (45, 46, 47) .

13. A device according to Claim 11 or 12,
**characterised in that** the boundary walls (48) have weights (53) at the free lower end.

14. A device according to one of Claims 1 to 13,
**characterised in that** at least the channel is formed by at least one cover (38) closed at the top.

15. A device according to one of Claims 1 to 14,
**characterised in that** fourth floats (39) are provided, which float on the oil slick and are connected in wind-tight manner with the cover (38) and close at least one part of the inlet and/or of the opening of the channel above the oil slick.

16. A device according to Claim 15,
**characterised in that** the fourth floats (39) are elastically connected to the cover via at least one bellows (40).

17. A device according to one of Claims 1 to 16,
**characterised in that** the inlet (11) comprises wind deflector elements (64) pointing towards the centre on its side remote from the channel.

## Revendications

1. Dispositif de récupération de pétrole en nappe sur un plan d'eau, tenu à la surface de l'eau au moyen d'au moins un premier flotteur (10) et muni d'une entrée (11) ouverte du côté orienté vers la nappe de pétrole et qui débouche, de l'autre côté, sur un canal (13) ayant des parois latérales (36) et logeant un séparateur (19) se prolongeant entre les parois latérales du canal pour définir une zone supérieure d'écoulement au-dessus du séparateur et une zone inférieure d'écoulement, séparée de la zone supérieure d'écoulement, au-dessous du séparateur (19, 33), les arêtes de séparation avant (20) du séparateur tournées vers la nappe de pétrole étant positionnées essentiellement au niveau de la couche de séparation (18) entre l'eau (17) et le pétrole (16) et le pétrole étant évacué de la zone supérieure d'écoulement dans le puits d'un dispositif gravitaire,
**caractérisé en ce que**
le séparateur (19, 33) consiste en une plaque plate se prolongeant essentiellement horizontalement entre les parois latérales (36) du canal (13) et raccordée au puits (23) du dispositif gravitaire par un élément élastique (31), le séparateur (19, 33) ayant un poids spécifique plus léger que l'eau et plus lourd que le pétrole et des dimensions telles que celui-ci se positionne automatiquement au niveau de la couche de séparation (18).

2. Dispositif selon la revendication 1,
**caractérisé par**
un deuxième flotteur (35) dont le poids spécifique est plus léger que l'eau et plus lourd que le pétrole, et dont la position est prise en compte pour la surveillance et/ou la correction et/ou le réglage de la position du séparateur (33) dans le canal.

3. Dispositif selon la revendication 1 ou 2,
**caractérisé en ce que**
le deuxième flotteur (35) et le séparateur (33) ont essentiellement le même poids spécifique.

4. Dispositif selon l'une des revendications 1 à 3,
**caractérisé en ce que**
le poids spécifique du séparateur (19, 33) est entre 850 et 950 kg/m³, notamment de 900 kg/m³.

5. Dispositif selon l'une des revendications 1 à 4,
**caractérisé en ce que**
le séparateur (19) peut se déplacer d'avant en arrière dans une glissière (32) de manière verticale par rapport aux parois latérales (36) du canal.

6. Dispositif selon l'une des revendications 1 à 5,
**caractérisé en ce que**
l'arête de séparation avant (20) du séparateur (19, 33) tournée vers la nappe de pétrole est positionnée légèrement en dessous de la couche de séparation (18) entre le pétrole et l'eau.

7. Dispositif selon l'une des revendications 1 à 6,
**caractérisé en ce que**
les premiers flotteurs (10) portent le dispositif de telle manière que celui-ci suive essentiellement la grande houle.

8. Dispositif selon l'une des revendications 1 à 7,
**caractérisé en ce que**
le canal (13) est porté sur l'eau au moyen d'au moins un troisième flotteur (30) et reste mobile par rapport à l'entrée (11), ses dimensions étant telles que le canal suive la petite houle.

9. Dispositif selon l'une des revendications 1 à 8,
**caractérisé en ce que**
le canal est ouvert par le dessous et l'écoulement inférieur débouche dans la mer à l'arrière du dispositif.

10. Dispositif selon l'une des revendications 1 à 9,
**caractérisé en ce que**
l'entrée est formée par des flotteurs de délimitation (12) maintenus ouverts au moyen d'un haubanage (15) et mobiles l'un par rapport à l'autre.

11. Dispositif selon l'une des revendications 1 à 10,
**caractérisé en ce que**
l'entrée est formée par une pluralité d'éléments flottants (45, 46, 47) présentant chacun des parois latérales de délimitation (48) orientées vers le bas qui se prolongent verticalement jusqu'au dessous de la couche de séparation (18), et les éléments flottants peuvent s'assembler pour former une entrée latéralement délimitée, dirigée vers le canal.

12. Dispositif selon la revendication 11,
**caractérisé en ce que**
les parois de délimitation (48) sont maintenues pivotantes par rapport aux éléments flottants (45, 46,47).

13. Dispositif selon la revendication 11 ou 12,
**caractérisé en ce que**
les parois de délimitation (48) présentent des lests (53) à leurs extrémités inférieures libres.

14. Dispositif selon l'une des revendications 1 à 13,
**caractérisé en ce qu'**
au moins le canal est obturé par le haut au moyen d'au moins un couvercle (38).

15. Dispositif selon l'une des revendications 1 à 14,
**caractérisé en ce que**
des quatrièmes flotteurs (39) sont prévus pour surnager sur la nappe de pétrole et sont raccordés à l'épreuve du vent au couvercle (38), obturant au moins une partie de l'entrée et/ou de la bouche du canal au-dessus de la nappe de pétrole.

16. Dispositif selon la revendication 15,
**caractérisé en ce que**
les quatrièmes flotteurs (39) sont raccordés de manière élastique au couvercle au moyen d'au moins un soufflet plissé (40).

17. Dispositif selon l'une des revendications 1 à 16,
**caractérisé en ce que**
l'entrée (11) présente, sur son côté détourné du canal, des éléments de conduite de vent (54) orientés en direction du centre.
